(19) Europäisches Patentamt
European Patent Office
Office européen des brevets

(11) **EP 4 647 304 A1**

(12) **EUROPEAN PATENT APPLICATION**

(43) Date of publication:
**12.11.2025 Bulletin 2025/46**

(21) Application number: **25157692.2**

(22) Date of filing: **13.02.2025**

(51) International Patent Classification (IPC):
**B60T 7/04** (2006.01)      **B60T 8/171** (2006.01)
**B60T 8/172** (2006.01)      **B60T 8/174** (2006.01)
**B60T 8/32** (2006.01)      **B60T 13/74** (2006.01)
**B60T 17/22** (2006.01)      **F16D 66/02** (2006.01)
**F16D 66/00** (2006.01)      **F16D 121/24** (2012.01)

(52) Cooperative Patent Classification (CPC):
**B60T 7/042; B60T 8/171; B60T 8/172; B60T 8/174;
B60T 8/3255; B60T 13/741; B60T 17/22;
F16D 66/025;** B60T 2201/022; B60T 2210/30;
B60T 2210/32; B60T 2220/04; B60T 2250/04;
B60T 2270/82; F16D 2066/001;      (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2024   CN 202410586016**

(71) Applicant: **Xiaomi EV Technology Co., Ltd.
100176 Beijing (CN)**

(72) Inventor: **GU, Wenhao
Beijing, 100176 (CN)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(54) **BRAKE FORCE CONTROL METHOD AND DEVICE**

(57)      A brake force control method includes: obtaining (S301) temperature data of a braking system of a vehicle and driving data of the vehicle during braking of the vehicle; and controlling (S302) a brake force output from a brake motor in the braking system according to the temperature data and the driving data, to ensure braking safety of the vehicle.

```
┌────────────────────────────────────────────────────────────┐
│ obtaining temperature data of a braking system of a vehicle  │      S301
│ and driving data of the vehicle during braking of the vehicle│
└────────────────────────────────────────────────────────────┘
                            │
                            ▼
┌────────────────────────────────────────────────────────────┐
│ controlling a brake force output from a brake motor in the   │      S302
│ braking system according to the temperature data and the     │
│ driving data                                                 │
└────────────────────────────────────────────────────────────┘
```

FIG. 3

EP 4 647 304 A1

(52) Cooperative Patent Classification (CPC): (Cont.)
    F16D 2121/24

**Description**

**TECHNICAL FIELD**

The present invention relates to the field of motor technologies, and more particularly to a brake force control method and device, a medium, a product, and a vehicle.

**BACKGROUND**

In the related art, vehicles generate a brake force through a braking system and the braking system's temperature rises during braking.

**SUMMARY**

In order to overcome problems existing in the related art, the present invention provides a brake force control method and device, a medium, a product and a vehicle.

The invention is set out in the appended set of claims.

According to a first aspect of embodiments of the present invention, there is provided a brake force control method, including:

obtaining temperature data of a braking system of a vehicle and driving data of the vehicle during braking of the vehicle; and

controlling a brake force output from a brake motor in the braking system according to the temperature data and the driving data.

Optionally, controlling the brake force output from the brake motor according to the temperature data and the driving data includes:

determining a braking demand according to distance information and speed information between the vehicle and a surrounding obstacle; and

in a case where the braking demand is not an emergency braking demand, controlling the brake force output from the brake motor according to the temperature data and the driving data.

Optionally, controlling the brake force output from the brake motor according to the temperature data and the driving data includes:

determining a target temperature prediction value of the brake motor in the braking system according to the temperature data and the driving data; and

controlling the brake force output from the brake motor according to the target temperature prediction value.

Optionally, controlling the brake force output from the brake motor according to the target temperature prediction value includes:

in a case where the target temperature prediction value is less than or equal to a first temperature threshold, controlling the brake motor to normally output the brake force.

Optionally, controlling the brake motor to normally output the brake force includes:

determining a first target brake force according to a brake pedal travel of the vehicle and a first preset relationship between the brake pedal travel and a normal brake force, and controlling the brake force output from the brake motor to be the first target brake force.

Optionally, controlling the brake force output from the brake motor according to the target temperature prediction value includes:

in a case where the target temperature prediction value is greater than the first temperature threshold, reducing the brake force output from the brake motor.

Optionally, reducing the brake force output from the brake motor includes:

determining a second target brake force according to the brake pedal travel of the vehicle and a second preset relationship between the brake pedal travel and a degraded brake force, and controlling the brake force output from the brake motor to be the second target brake force,

in which in the second preset relationship, a degraded brake force corresponding to a brake pedal travel is less than or equal to a normal brake force corresponding to the brake pedal travel.

Optionally, the method further includes:

determining a temperature variation trend of the brake motor within a first preset length of time after reducing the brake force output from the brake motor; and

controlling the brake force output from the brake motor according to the temperature variation trend.

Optionally, controlling the brake force output from the brake motor according to the temperature variation trend includes:

determining a minimum deceleration of the vehicle capable of ensuring braking safety during the braking, according to distance information and speed information between the vehicle and the surrounding obstacle; and

in a case where the temperature variation trend is an upward trend, determining a third target brake force corresponding to the minimum deceleration, and controlling the brake force output from the brake motor to be the third target brake force.

Optionally, controlling the brake force output from the brake motor according to the temperature variation trend includes:

in a case where the temperature variation trend is not an upward trend, controlling the brake force output from the brake motor to be unchanged until the vehicle stops.

Optionally, the temperature data includes a first temperature value of a brake disc in the braking system and a second temperature value of the brake motor at a first moment, the driving data includes driving environment data, driving speed and braking deceleration, and the driving environment data represents parameter data affecting a temperature of the braking system in a vehicle driving environment; and

determining the target temperature prediction value of the brake motor in the braking system according to the temperature data and the driving data includes:

determining a first temperature prediction value of the brake disc at a second moment according to the first temperature value, the driving speed, the driving environment data and the braking deceleration, in which the second moment is a future moment of the first moment;

determining a second temperature prediction value of the brake motor at the second moment according to the second temperature value and the first temperature prediction value; and

determining the target temperature prediction value according to the second temperature prediction value.

Optionally, determining a first temperature prediction value of the brake disc at a second moment according to the first temperature value, the driving speed, the driving environment data and the braking deceleration includes:

determining first temperature influence data of the vehicle driving environment on the brake disc according to the driving environment data, in which the driving environment data at least includes a temperature and a humidity of the vehicle driving environment;

determining a second temperature influence data of the vehicle during the braking according to the driving speed and the braking deceleration, in which the second temperature influence data is configured to represent thermal energy generated by conversion of kinetic energy into brake disc friction during the braking of the vehicle; and

determining the first temperature prediction value according to the first temperature influence data, the second temperature influence data and the first temperature value.

Optionally, determining a second temperature prediction value of the brake motor at the second moment according to the second temperature value and the first temperature prediction value includes:

determining a radiation temperature prediction value of the temperature of the brake disc radiated to the brake motor at the second moment according to the first temperature prediction value and a temperature influence factor, in which the temperature influence factor represents a degree of influence of the temperature of the brake disc on the temperature of the brake motor; and

determining the second temperature prediction value according to the radiation temperature prediction value and the second temperature value.

Optionally, determining a target temperature prediction value of the brake motor in the braking system according to the temperature data and the driving data includes:

determining second temperature prediction values of the brake motor at a plurality of future moments, according to the temperature data and the driving data; and
determining a maximum value of the second temperature prediction values as the target temperature prediction value.

Optionally, the method further includes:

in a case where a temperature of the brake motor exceeds a second temperature threshold, maintaining the brake force currently output from the brake motor while a parking locking mechanism locks the vehicle, and controlling the brake force output from the brake motor to be zero,
in which the second temperature threshold is greater than the first temperature threshold, the second temperature threshold is less than a motor failure temperature value, and the motor failure temperature value is a temperature value of the brake motor when experiencing a braking failure.

Optionally, before controlling a brake force output from a brake motor in the braking system according to the temperature data and the driving data, the method further includes:
determining that the vehicle satisfies at least one of following preset trigger conditions:

a number of times the braking is performed within a second preset length of time being greater than a preset number of times; or
the temperature variation trend of a temperature value of a brake disc or the brake motor in the braking system within the second preset length of time being an upward trend.

Optionally, the method further includes:
outputting alert information, to alert a driver that there is a risk of brake force failure.

According to a second aspect of embodiments of the present invention, there is provided a brake force control device, including:

an obtaining module configured to obtain temperature data of a braking system of a vehicle and driving data of the vehicle during braking of the vehicle; and
a control module configured to control a brake force output from a brake motor in the braking system according to the temperature data and the driving data.

According to a third aspect of embodiments of the present invention, there is provided a vehicle, including:

a storage device configured to store a computer program; and

an execution device configured to execute the computer program, to perform the brake force control method provided by the first aspect of embodiments of the present invention.

The technical solutions provided by embodiments of the present invention may include the following beneficial effect.

In the present invention, the brake force output from the brake motor may be controlled according to the temperature data of the braking system of the vehicle and the driving data of the vehicle during braking of the vehicle. Thus, the brake force output from the brake motor in the braking system may be controlled correspondingly through the temperature data of the braking system and the driving data of the vehicle, which can effectively avoid the braking fade caused by the excessively high temperature of the brake motor and ensure the driving safety.

It should be understood that, the forgoing general description and the detailed description hereinafter are only illustrative and explanatory, and cannot limit the present invention.

## BRIEF DESCRIPTION OF THE DRAWINGS

The accompanying drawings herein are incorporated into the specification and constitute a part of the specification. The accompanying drawings illustrate embodiments conforming to the present invention and are used to explain the principles of the present invention together with the specification.

FIG. 1 is a structural schematic diagram of an EMB system illustrated according to an illustrative embodiment.

FIG. 2 is a schematic diagram of vehicle speed, brake force and temperature as a function of time during braking.

FIG. 3 is a flow diagram of a brake force control method illustrated according to an illustrative embodiment.

FIG. 4 is a graph of a first preset relationship and a second preset relationship in a brake force control method illustrated according to an illustrative embodiment.

FIG. 5 is a schematic diagram of architecture for realizing a brake force control method illustrated according to an illustrative embodiment.

FIG. 6 is a flow diagram of another brake force control method illustrated according to an illustrative embodiment.

FIG. 7 is a block diagram of a brake force control device illustrated according to an illustrative embodiment.

FIG. 8 is a block diagram of a vehicle illustrated according to an illustrative embodiment.

FIG. 9 is a schematic diagram of a complex roadway scenario in which a driver uses continuous braking illustrated according to an illustrative embodiment.

## DETAILED DESCRIPTION

Examples of embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the exemplary embodiments do not represent all implementations consistent with the present invention. On the contrary, they are merely examples of a device and a method consistent with some aspects of the present invention, as elaborated in the appended claims.

A high temperature may cause the degradation of braking performance of a brake motor in the braking system, which will seriously lead to the loss of clamping ability of the brake motor, such that the whole vehicle loses the brake force, and cannot guarantee driving safety.

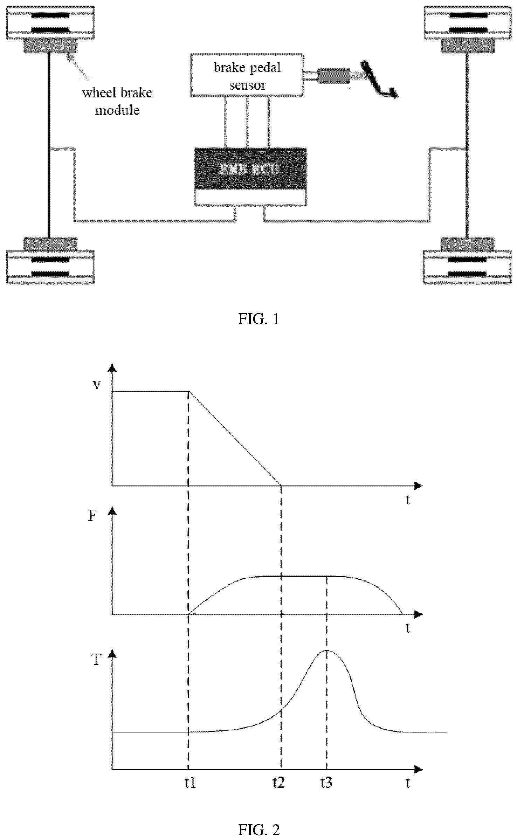

As vehicles become smarter and more electrified, brake-by-wire systems are undergoing continuous changes. Electro Mechanical Brake (EMB) has a simple structure that facilitates the need for platform development. The architecture of the EMB system is illustrated in FIG. 1, in which a brake motor is configured at each wheel end and connected to an ECU (Electronic Control Unit) for control. Wheel brake modules at four wheel ends are controlled through pure control-by-wire, according to a braking signal transmitted by a brake pedal sensor. Therefore, EMB has the advantages of simple structure and fast response time.

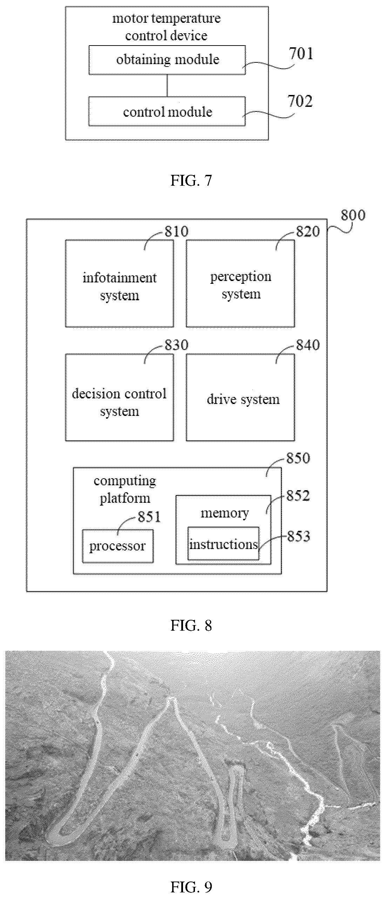

In a complex roadway, such as continuous downhill, continuous turning, complex conditions as illustrated in FIG. 9, a driver controls the vehicle to continuously brake, a braking friction plate rubs against a brake disc during the braking to generate a brake force, and at the same time, temperatures of the brake friction plate and the brake disc will rise.

Specifically, the relationship between a vehicle speed v, a brake force F and a temperature T as a function of time t during a braking is illustrated in FIG. 2. At a moment t1 the driver starts braking, the vehicle speed starts to decrease, the temperature of the brake disc starts to rise due to brake friction, and the temperature of the brake motor starts to rise due to the temperature of the brake disc and its own work. At a moment t2, the vehicle brakes to a stop. In this case the vehicle is stationary, the brake disc and motor lose effective air cooling, and the temperature starts to rise sharply. At a moment t3, the temperature of the brake disc and the temperature of the brake motor are in thermal equilibrium at a stable environmental temperature. After the moment t3, the temperature of the brake disc and the temperature of the brake motor start to cool down naturally and gradually decrease to the environmental temperature.

A high temperature may cause the degradation of braking performance of a brake motor, which will seriously lead to insufficient brake force and even the loss of clamping ability of the brake motor, such that the whole vehicle loses the brake force.

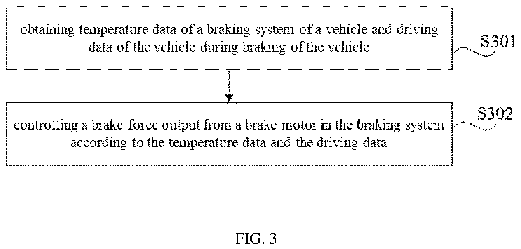

FIG. 3 is a flow diagram of a brake force control method illustrated according to an illustrative embodiment. As illustrated in FIG. 3, the brake force control method includes following steps.

In step S301, temperature data of a braking system of a vehicle and driving data of the vehicle during braking of the vehicle is obtained.

In step S302, a brake force output from a brake motor in the braking system is controlled according to the temperature data and the driving data.

For example, the braking system of the vehicle applies a certain amount of force to the wheels of the vehicle, thus forcing them to brake to a certain extent. For example, the moving vehicle is controlled to force it to slow down or even stop according to the driver's requirements, the speed of the vehicle traveling downhill is controlled to keep it stable, and so on. The temperature data of the braking system may be obtained through a temperature sensor provided on the vehicle, and the driving data of the vehicle may be data related to the vehicle during driving, such as the wheel speed of the vehicle during driving, temperature and humidity of the surrounding environmental, distances from other vehicles, presence of an unexpected condition in front of the vehicle, the travel of the driver to press the accelerator pedal or the brake pedal, the malfunctioning condition, and so on.

For example, a target temperature prediction value of the brake motor in the braking system may be predicted and obtained according to the obtained temperature data and the driving data. For example, the heat of the brake disc increased due to braking at the next moment can be predicted according to the driving data of the vehicle at the current moment, and temperature prediction data of the brake disc at the next moment of the current moment can be determined according to the temperature of the brake disc at the current moment and the predicted increased heat. Since the temperature of the brake disc affects the temperature of the brake motor, a temperature prediction value of the brake motor at the next moment of the current moment may be further predicted according to the predicted temperature prediction value of the brake disc at the next moment of the current moment. Additionally, in addition to the brake disc has a great impact on the temperature of the brake motor, some of the other components of the braking system close to the brake motor may also radiate part of the heat to the brake motor when generating heat, so in addition to the brake disc, it is also necessary to consider the influence of the other components of the braking system on the temperature of the brake motor.

In the present invention, the brake force output from the brake motor may be controlled according to the temperature data of the braking system of the vehicle and the driving data of the vehicle during braking of the vehicle. Thus, the brake force output from the brake motor in the braking system may be controlled correspondingly through the temperature data of the braking system and the driving data of the vehicle, which can effectively avoid the braking fade caused by the excessively high temperature of the brake motor and ensure the driving safety.

As an optional embodiment, controlling the brake force output from the brake motor according to the temperature data and the driving data includes:

determining a braking demand according to distance information and speed information between the vehicle and a surrounding obstacle; and
in a case where the braking demand is not an emergency braking demand, controlling the brake force output from the brake motor according to the temperature data and the driving data.

For example, the speed information includes a driving speed of the vehicle and a moving speed of the surrounding obstacle. The surrounding obstacles of the vehicle are categorized as either static or dynamic obstacles, static obstacles such as roadside barriers, road edges, trees, rock piles, traffic lights, etc., and dynamic obstacles such as pedestrians and vehicles. According to the distance information and the speed information between the vehicle and the surrounding obstacle, it may be determine whether there is an emergency situation in front of the vehicle, and an emergency situation in front of the vehicle requires the driver to control the vehicle to perform emergency braking, or requires the vehicle to control the vehicle to perform emergency braking automatically, in order to ensure the driving safety, so that the brake force of the vehicle to meet the needs of emergency braking.

For example, in a case where the surrounding obstacle of the vehicle is a static obstacle, a speed of the static obstacle is zero. When the distance between the vehicle and the surrounding obstacle is close and the driving speed of the vehicle is fast, the vehicle is controlled to stop urgently, and the braking demand is an emergency braking demand. For example, the braking demand is an emergency braking demand when the distance between the vehicle and the surrounding obstacle is less than a distance threshold and when the driving speed of the vehicle is greater than a speed threshold, and the braking demand is not an emergency braking demand when the distance between the vehicle and the surrounding obstacle is greater than the distance threshold, or when the driving speed of the vehicle is less than the speed threshold. When the braking demand is not an emergency braking demand, a normal deceleration of the vehicle of the current braking and a minimum deceleration capable of ensuring safety can be determined according to a current driving speed of the vehicle and the distance information between the vehicle and the surrounding obstacle, and the vehicle can select a normal brake force corresponding to the normal deceleration, a degraded brake force corresponding to the normal deceleration or a minimum brake force corresponding to the minimum deceleration to control the brake force output from the brake motor according to the actual situation. The normal brake force corresponding to the normal deceleration is greater than the degraded brake force corresponding to the normal deceleration. For example, when the temperature prediction value of the brake motor is less than a first temperature threshold for ensuring braking safety, the brake motor can be controlled to output the normal brake force corresponding to the normal deceleration. When the temperature prediction value of the brake motor is greater than or equal to the first temperature threshold, the brake motor can be controlled to output the degraded brake force corresponding to normal deceleration. When the temperature prediction value of the brake motor is greater than or equal to the first temperature threshold and the temperature is still in an upward trend within a preset length of time of outputting the degraded brake force, the brake motor can be controlled to output the minimum brake force corresponding to the minimum deceleration. In addition, in a case where the temperature prediction value is greater than the second temperature threshold, the brake force currently output from the brake motor may be maintained while a parking locking mechanism locks the vehicle, and then the brake force output from the brake motor is controlled to be zero. The second temperature threshold is greater than the first temperature threshold , and the second temperature threshold is less than a failure temperature value of the brake motor.

By way of example, in a case where the surrounding obstacle of the vehicle is a dynamic obstacle, it may be determined according to a correspondence between the distance information and the speed information between the vehicle and the surrounding obstacle. If the dynamic obstacle is a pedestrian, the braking demand is an emergency braking demand when the speed of the vehicle is 50m/s and the distance between the vehicle and the surrounding obstacle is determined to be less than 10m; the braking demand is an emergency braking demand when the speed of the vehicle is 100m/s and the distance between the vehicle and the surrounding obstacle is determined to be less than 20m. If the dynamic obstacle is a vehicle in front, the current braking demand can be considered according to the relationship between the speed of the dynamic obstacle and the speed of the vehicle itself. For example, when the speed of the vehicle in front is greater than or equal to the speed of this vehicle, the minimum deceleration can be determined without combining the distance information between the vehicle in front and this vehicle, and only the target temperature prediction value of the brake motor can be determined, and the brake force output from the brake motor can be determined according to the target temperature prediction value; when the speed of the vehicle in front is less than the speed of this vehicle, the distance information between the vehicle in front and this vehicle as well as the speed of the vehicle in front, can be combined to determine the minimum deceleration capable of ensuring the braking safety of this vehicle, which may be combined with the target temperature prediction value of the brake motor, to control the brake force output from the brake motor.

Emergency braking need can be controlled by an Autonomous Emergency Braking (AEB) system, which mainly includes a control module (ECU), a distance measuring module and a braking module. The distance measuring module can measure the distance information between the vehicle and the surrounding obstacle, in which the distance measuring module includes microwave radar, face recognition technology and video system, etc., which can provide safe, accurate and real-time image and road condition information of the roadway ahead. Alternatively, various sensors in an ADAS (Advanced Driving Assistance System) on the vehicle, such as millimeter-wave radar, LiDAR, monocular or binocular camera, and satellite navigation, etc., can be used to sense the surrounding environment at any time during driving of the vehicle, collect data, and carry out recognition, detection and tracking of static and dynamic objects, to obtain the distance information between the vehicle and the surrounding obstacle.

As an optional embodiment, controlling the brake force output from the brake motor according to the temperature data and the driving data includes:

determining a target temperature prediction value of the brake motor in the braking system according to the temperature data and the driving data; and
controlling the brake force output from the brake motor according to the target temperature prediction value.

By way of example, the target temperature prediction value may be a temperature prediction value for the brake motor at a next moment of the current moment, or may be one of a plurality of temperature prediction values at a plurality of future moments of the current moment. For example, this may be a temperature maximum value among the plurality of temperature prediction values, or may be an average of a plurality of values above a threshold among the plurality of temperature prediction values, etc.

By way of example, the brake force output from the brake motor can be controlled according to the target temperature prediction value. For example, when the target temperature prediction value is small, the brake force can be controlled to be unchanged, i.e. to conform to the normal brake force corresponding to the brake pedal travel controlled by the driver. When the target temperature prediction value is large but smaller than the failure temperature threshold, the brake force can be controlled to decrease and then remain unchanged, i.e., the brake force can be controlled to decrease to less than the normal brake force corresponding to the brake pedal travel controlled by the driver and then remain unchanged. The failure temperature threshold can be set according to a failure temperature value at which the motor braking may fail. When the brake force is reduced but the target temperature prediction value is still in upward trend, the parking system can be controlled to lock the brake force and the motor can be controlled to not output brake force to stop the vehicle in time, avoid further increase in the temperature of the brake motor.

The present invention can monitor and predict the temperature of the brake motor, to perform a corresponding braking scheme, which can effectively avoid the braking fade caused by the excessively high temperature of the brake motor and ensure the driving safety.

As an optional embodiment, controlling the brake force output from the brake motor according to the target temperature prediction value includes:
in a case where the target temperature prediction value is less than or equal to a first temperature threshold, controlling the brake motor to normally output the brake force.

When the target temperature prediction value is greater than the first temperature threshold, the brake force output from the brake motor is reduced.

By way of example, the first temperature threshold may be set according to the actual braking demand, or may be determined according to a failure temperature value at which the brake motor may experience a braking fade, for example, it may be set that the first temperature threshold = 0.9 × the failure temperature value, which is not limited herein.

By way of example, when the target temperature prediction value is less than or equal to the first temperature threshold, the temperature prediction value of the brake motor does not exceed the limit, i.e., the current braking operation does not have a risk of braking fade or has a small risk, and the brake force can be output normally according to the braking operation of the driver. For example, the magnitude of the brake force that should be output normally in order to correspond to the brake pedal travel is determined according to the brake pedal travel pressed by the driver, and the relationship between the travel and the normal brake force. When the target temperature prediction value is greater than the first temperature threshold, the temperature prediction value of the brake motor exceeds the limit, i.e., the current braking operation has a risk of braking fade or has a high risk, and the brake force that is otherwise to be output normally according to the braking operation of the driver may be reduced. For example, the magnitude of the brake force that should be output in a reduced manner in order to correspond to the brake pedal travel is determined according to the brake pedal travel pressed by the driver, and the relationship between the travel and the degraded brake force, to reduce the brake force output from the brake motor.

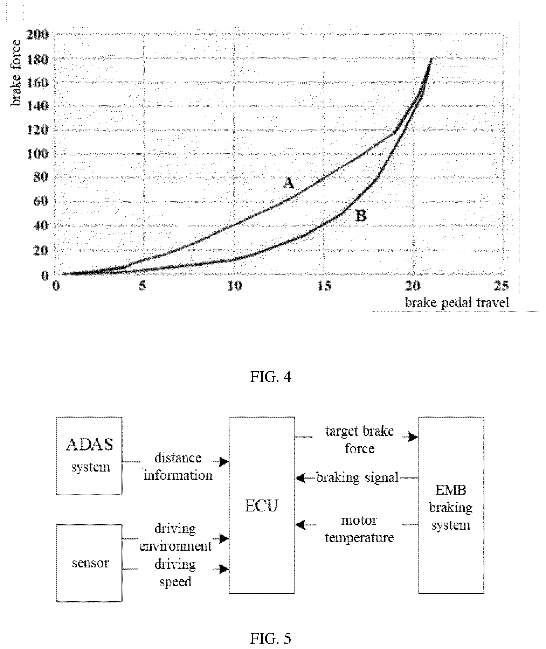

By way of example, there is a first preset relationship between the brake pedal travel of the vehicle and the normal brake force, and there is a second preset relationship between the brake pedal travel of the vehicle and the degraded brake force. As illustrated in FIG. 4, curve A may represent a first preset relationship between the brake pedal travel of the vehicle and the normal brake force, and curve B may represent a second preset relationship between the brake pedal travel of the vehicle and the degraded brake force. Specifically, the slopes of both curves A and B are increasing, and in the first preset relationship and the second preset relationship, the larger the brake pedal travel, the corresponding normal brake force and the degraded brake force are both in an upward trend, but the normal brake force corresponding to a brake pedal travel is greater than or equal to the degraded brake force corresponding to the same brake pedal travel. A corresponding preset relationship can be selected according to the relationship between the target temperature prediction value and the first temperature threshold.

As an optional embodiment, controlling the brake motor to normally output the brake force includes: determining a first target brake force according to a brake pedal travel of the vehicle and a first preset relationship between the brake pedal travel and a normal brake force, and controlling the brake force output from the brake motor to be the first target brake force.

Here, when the target temperature prediction value is less than or equal to the first temperature threshold, the first target brake force can be determined according to the curve A and the brake pedal travel so that the motor outputs the brake force normally.

As an optional embodiment, reducing the brake force output from the brake motor includes: determining a second target brake force according to the brake pedal travel of the vehicle and a second preset relationship between the brake pedal travel and a degraded brake force, and controlling the brake force output from the brake motor to be the second target brake force, in which in the second preset relationship, a degraded brake force corresponding to a brake pedal travel is less than or equal to a normal brake force corresponding to the brake pedal travel.

Here, when the target temperature prediction value is greater than the first temperature threshold, a second target brake force may be determined according to the curve B and the brake pedal travel so that the brake force output from the brake motor is a reduced braking force.

As an optional embodiment, the method further includes:

determining a temperature variation trend of the brake motor within a first preset length of time after reducing the brake force output from the brake motor; and
controlling the brake force output from the brake motor according to the temperature variation trend.

By way of example, the first preset length of time may be set according to the actual situation, such as 5 minutes, and the temperature variation trend here may be a temperature variation trend predicted within the first preset length of time after reducing the brake force output from the brake motor, and may also be a temperature variation trend determined according to the actual measured temperature value within the first preset length of time after reducing the brake force output from the brake motor. After the brake force output from the brake motor is reduced, the temperature variation trend of the brake motor is further continuously detected and the brake force output from the brake motor is controlled again.

By way of example, in one way, when the temperature variation trend is still an upward trend, the brake force currently output from the brake motor is maintained and the parking locking mechanism is immediately driven to lock the vehicle, and then the brake force output from the brake motor can be controlled to be zero, avoiding a safety risk of braking failure due to the further increasing of the temperature of the motor; or alternatively, the brake force output from the motor can also be further reduced in a case of ensuring safety. In another way, when the temperature variation trend is not an upward trend, such as a steady trend or a downward trend, the brake force output from the motor can controlled to be kept unchanged and remain the same magnitude of the brake force as it was when the brake force output from the brake motor was previously reduced. Alternatively, it is also possible that when the temperature variation trend is a downward trend and the temperature of the brake motor decreases to less than a set temperature threshold to which the temperature can rise up, then the brake motor can be controlled to switch to a mode in which the corresponding brake force is determined according to the first preset relationship between the brake pedal travel and the normal brake force, to satisfy the user's braking demand in a case of ensuring the safety.

As an optional embodiment, controlling the brake force output from the brake motor according to the temperature variation trend includes:

determining a minimum deceleration of the vehicle capable of ensuring braking safety during the braking, according to the distance information and speed information between the vehicle and the surrounding obstacle; and

in a case where the temperature variation trend is an upward trend, determining a third target brake force corresponding to the minimum deceleration, and controlling the brake force output from the brake motor to be the third target brake force. The third target brake force is less than the second target brake force.

By way of example, a range of decelerations of the vehicle capable of ensuring braking safety during braking may be determined according to the distance information and speed information between the vehicle and the surrounding obstacle, and a minimum deceleration may be determined from the range of decelerations. For example, when the range of decelerations is 2-10m/s$^2$, the minimum deceleration is 2m/s$^2$.

By way of example, there is a correspondence between each deceleration and the brake force, and magnitudes of both the deceleration and the brake force are different for different speeds of the vehicle. When the brake force output from the brake motor is reduced and the temperature variation trend of the brake motor is still an upward trend, a third target brake force corresponding to the minimum deceleration can be determined, and the brake force output from the brake motor can be controlled to be the third target brake force. It can be understood that the greater the brake force when braking, the faster the speed of the vehicle decreases, and the smaller the brake force when braking, the slower the speed of the vehicle decreases. Therefore, the maximum value in the range of the decelerations here is determined according to the normal brake force controlled by the driver before the brake force is reduced, that is, according to the first preset relationship between the brake pedal travel of the driver and the normal brake force.

As an optional embodiment, controlling the brake force output from the brake motor according to the temperature variation trend includes:

in a case where the temperature variation trend is not an upward trend, controlling the brake force output from the brake motor to be unchanged until the vehicle stops.

By way of example, if the predicted temperature variation trend is not an upward trend, such as a steady trend or a downward trend, the brake force output from the motor can be controlled to be kept unchanged, and remain the same magnitude of the brake force as it was when the brake force output from the brake motor was previously reduced, until the vehicle stops.

As an optional embodiment, the temperature data includes a first temperature value of a brake disc in the braking system and a second temperature value of the brake motor at a first moment, the driving data includes driving environment data, driving speed and braking deceleration, and the driving environment data represents parameter data affecting a temperature of the braking system in a vehicle driving environment; and

determining the target temperature prediction value of the brake motor in the braking system according to the temperature data and the driving data includes:

determining a first temperature prediction value of the brake disc at a second moment according to the first temperature value, the driving speed, the driving environment data and the braking deceleration, in which the second moment is a future moment of the first moment;

determining a second temperature prediction value of the brake motor at the second moment according to the second temperature value and the first temperature prediction value; and

determining the target temperature prediction value according to the second temperature prediction value.

By way of example, the first moment may be a current moment at which the temperature data and the driving data are obtained, or may be other moments adjacent to the moment at which the temperature data and the driving data are obtained. The second moment can be the next moment in time of the first moment, or any moment in the future from the first moment, which is not limited herein.

By way of example, the influence of the driving data on the temperature of brake disc may be determined according to the driving data. The driving data includes the driving speed, the driving environment data, and the braking deceleration, and the braking deceleration is a braking deceleration corresponding to the normal brake force currently output from the brake motor. The driving speed can affect the magnitude of brake force as well as environmental air cooling, and braking deceleration can affect the driving speed and mainly affect the brake force and temperature between the brake disc and brake friction plate. The driving environment data may include the temperature and humidity of the vehicle driving environment. The vehicle is in a natural environment, and the environmental temperature and humidity, air mobility, etc., also have an influence on the temperature of the braking system.

By way of example, the first temperature prediction value of the brake disc at a next moment of the current moment, or the first temperature prediction value of the brake disc at a future moment of the current moment, may be predicted and obtained according to the first temperature value of the brake disc in the braking system, the driving speed, the driving environment data, and the braking deceleration at the current moment. Moreover, it is also possible to continue to predict the temperature value of the next moment or the next moment of the future moment again according to the first temperature prediction value, and so repeat the prediction process many times to be able to obtain the first temperature prediction values of a plurality of future moments of the current moment.

By way of example, the temperature of the brake disc has a large influence on the temperature value of the brake motor, and as can be seen above, it is possible to predict and obtain the first temperature prediction value of the brake disc at the next moment of the current moment, or the first temperature prediction value of the brake disc at a future moment of the current moment. Therefore, it is also possible to determine a second temperature prediction value of the brake motor at a next moment of the current moment of the brake motor, or a second temperature prediction value of the brake motor at a future moment of the current moment, according to the first temperature prediction value of the brake disc and the second temperature value of the brake motor at the current moment.

Here, when there is one second temperature prediction value, the second temperature prediction value may be determined as a target temperature prediction value; alternatively, a series of correction operations may be performed on the second temperature prediction value to obtain the target temperature prediction value to make the target temperature prediction value more accurate. When there is a plurality of second temperature prediction values, one of the plurality of second temperature prediction values may be determined as the target temperature prediction value, e.g., a maximum value of the plurality of second temperature prediction values may be determined as the target temperature prediction value; further, the maximum value of the plurality of second temperature prediction values may be subjected to a series of correction operations, and the corrected value may be determined as the target temperature prediction value.

As an optional embodiment, determining a first temperature prediction value of the brake disc at a second moment according to the first temperature value, the driving speed, the driving environment data and the braking deceleration includes:

determining first temperature influence data of the vehicle driving environment on the brake disc according to the driving environment data, in which the driving environment data at least includes a temperature and a humidity of the vehicle driving environment;
determining a second temperature influence data of the vehicle during the braking according to the driving speed and the braking deceleration, in which the second temperature influence data is configured to represent thermal energy generated by conversion of kinetic energy into brake disc friction during the braking of the vehicle; and
determining the first temperature prediction value according to the first temperature influence data, the second temperature influence data and the first temperature value.

By way of example, the vehicle driving environment will have an influence on the temperature of the brake disc of the vehicle, such as environmental temperature and humidity. The higher the environmental temperature and the lower the humidity, the slower the temperature of the brake disc will decrease, and the lower the environmental temperature and the higher the humidity, the faster the temperature of the brake disc will decrease. When the vehicle is moving, the brake force of the vehicle has a large influence on the temperature of the brake disc, and the brake force and the speed of the vehicle usually affect each other. The greater the speed of the vehicle, the greater the brake force required for braking, the smaller the speed of the vehicle, the smaller the brake force required for braking; the greater the braking deceleration when braking, the faster the speed of the vehicle decreases, the smaller the braking deceleration when braking, the slower the speed of the vehicle decreases.

Here, the first temperature influence data of the vehicle driving environment on the brake disc can be determined at least according to the environmental temperature and humidity. Furthermore, the second temperature influence data corresponding to thermal energy generated by the conversion of kinetic energy into the brake disc friction during braking of the vehicle is determined according to the driving speed and the braking deceleration. Thus, the first temperature prediction value at the second moment can be determined according to the first temperature influence data, the second temperature influence data, and the first temperature value at the first moment. Further, a sum of the first temperature influence data, the second temperature influence data, and the first temperature value at the first moment is the first temperature prediction value at the second moment, and the first temperature influence data of the vehicle driving environment on the brake disc is negative.

By way of example, the first temperature prediction value may be obtained by calculating according to the following calculation formula (1):

$$\text{calculation formula (1):} \quad T_{\text{disc}}(n+1) = T_{\text{disc}}(n) + T_{\text{en}}(n+1) + \text{factor} * \int q(t)\, dt;$$

where $T_{\text{disc}}(n+1)$ can represent the first temperature prediction value of the brake disc at the next moment of the nth moment; $T_{\text{disc}}(n)$ can represent the first temperature value of the brake disc at the nth moment; $T_{\text{en}}(n+1)$ can represent the heat dissipated by natural cooling of the brake disc at the next moment of the nth moment; t can represent the length of the braking time; factor can be a temperature influence factor, which can be determined according to actual needs; q(t) represents the heat flow density of the brake disc, where assuming that the entire braking process is a uniform deceleration process, the relationship between the heat flow density q and the time t can be obtained as shown in the following calculation formula (2):

$$\text{calculation formula (2):} \quad q(t) = Z \frac{-ka^2 t + kv_0 a}{2m\pi(R^2 - r^2)};$$

where q(t) is the heat flow density loaded on the surface of the brake disc at time t; k is the mass of the shaft; a is the braking deceleration; $v_0$ is the braking initial speed; m is the number of brake discs assembled on each shaft; R and r are the outer and inner diameters of the annular region of friction between the brake disc brake lining and the disc surface, respectively; and Z is the efficiency of conversion of the kinetic energy of the vehicle into thermal energy.

Where, $\int q(t)\, dt$ can represent the heat generated by the brake disc within time t; $T_{\text{en}}(n+1)$ can be obtained according to the heat dissipation equation, where the actual value of the heat dissipated by natural cooling can be related to the environmental temperature and humidity, heat dissipation coefficient, air mobility, brake disc material, brake disc area and so on, and can be determined according to empirical equation for natural heat dissipation in the related art, which is not limited herein.

As an optional embodiment, determining a second temperature prediction value of the brake motor at the second moment according to the second temperature value and the first temperature prediction value includes:

determining a radiation temperature prediction value of the temperature of the brake disc radiated to the brake motor at the second moment according to the first temperature prediction value and a temperature influence factor, in which the temperature influence factor represents a degree of influence of the temperature of the brake disc on the temperature of the brake motor; and
determining the second temperature prediction value according to the radiation temperature prediction value and the second temperature value.

By way of example, the temperature of the brake disc will radiate to the brake motor, causing the temperature of the brake motor to increase, but the temperature of the brake disc does not completely radiate to the brake motor, and there will be a certain loss of heat due to different physical properties, different setups, and different cooling measures. For example, in a case where the temperature of the brake disc is 1000 degrees Celsius, the temperature value radiated to the brake motor may be 300-400 degrees Celsius. Therefore, a temperature influence factor may be set for determining a degree of influence of the temperature of the brake disc on the temperature of the brake motor, which is in relation to the physical properties of the brake motor and the brake disc, the setting distance and so on, such as the material of the brake motor and the brake disc, the area in contact with the air, the volume of air that can be accommodated by the surrounding space and so on. The temperature influence factor may be obtained according to actual needs, experimental measurements, and specifically, may be a fixed value or a value varying correspondingly according to actual environmental conditions, which is not limited herein.

By way of example, the second temperature prediction value can be obtained according to the following calculation formula (3):

$$\text{calculation formula (3):} \quad T_{\text{motor}}(n+1) = T_{\text{disc}}(n+1) * \text{factor} + T_{\text{motor}};$$

where $T_{\text{motor}}(n+1)$ is a second temperature prediction value of the brake motor at the next moment of the nth moment; $T_{\text{disc}}(n+1)$ is a first temperature prediction value of the brake disc at the next moment of the nth moment; $T_{\text{motor}}(n)$ is a second temperature value of the brake motor at the nth moment; and factor is a temperature influencing factor, which can be determined according to the actual needs.

As an optional embodiment, determining a target temperature prediction value of the brake motor in the braking system according to the temperature data and the driving data includes:

determining second temperature prediction values of the brake motor at a plurality of future moments, according to the temperature data and the driving data; and

determining a maximum value of the second temperature prediction values as the target temperature prediction value.

By way of example, in the implementation herein, a maximum value of the second temperature prediction values at the plurality of future moments is determined as the target temperature prediction value. When the maximum value is less than or equal to the first temperature threshold, it means that the temperature value at the plurality of future moments will be less than the first temperature threshold, and when the maximum value is greater than the first temperature threshold, it means that there is a risk of braking fade of the motor at at least one of the plurality of future moments.

As an optional embodiment, the method further includes:

monitoring a real-time temperature value of the brake motor, in a case where the temperature value of the brake motor exceeds a second temperature threshold, maintaining the brake force currently output from the brake motor while a parking locking mechanism locks the vehicle, and controlling the brake force output from the brake motor to be zero, the second temperature threshold is greater than the first temperature threshold, the second temperature threshold is less than a motor failure temperature value, and the motor failure temperature value is a temperature value of the brake motor when experiencing a braking failure.

By way of example, the second temperature threshold may be set according to the actual braking demand, which may be determined according to a failure temperature value at which the brake motor may experience braking fade. For example, it may be set that the second temperature threshold = 0.98 × the failure temperature value. It can be understood that when the temperature value of the brake motor exceeds the second temperature threshold, it is necessary to control the parking system of the vehicle to perform forced braking to control the vehicle to stop, so the second temperature threshold is greater than the first temperature threshold for ensuring braking safety as described above, and in order to avoid failure of the motor braking and the parking braking due to excessively high temperature, the second temperature threshold is less than the motor failure temperature value. The motor failure temperature value is a temperature value at which the brake motor may experience braking failure during braking, which may be calculated according to actual measurements, experience in the field, characteristics of the brake motor, and calculations in the related art, which is not limited herein.

For example, when a normal brake force corresponding to the brake pedal travel is 24,000 N, a degraded brake force is 12,000 N, and the minimum brake force permissible is determined to be 900 N according to the minimum deceleration. When the temperature value of the brake motor exceeds the second temperature threshold, the brake force output from the brake motor is the degraded brake force of 12,000N, and the magnitude of the brake force output from the parking system is controlled to be 12,000N; and when the temperature value of the brake motor exceeds the second temperature threshold, the brake force output from the brake motor is the minimum brake force of 900N, and the magnitude of the brake force output from the parking system is controlled to be 900N. Here, it generally takes at least one degradation of the brake force before the temperature rises above the second temperature threshold, but in order to bring the vehicle to a stop as quickly as possible, it is also possible to control the brake force output from the brake motor to be a normal brake force of 24,000N.

In the present invention, in order to avoid a safety risk caused by braking fade, when the temperature value of the brake motor exceeds a second temperature threshold, the braking force currently output from the motor is maintained, immediately the parking locking mechanism is driven to lock the vehicle, and then the brake force output from the brake motor can be controlled to be zero, to avoid the safety risk of braking failure due to the further increasing temperature of the motor, and therefore further ensure driving safety.

As an optional embodiment, before determining the target temperature prediction value of the brake motor in the braking system according to the temperature data and the driving data, the method further includes:

determining that the vehicle satisfies at least one of following preset trigger conditions:

a number of times the braking is performed within a second preset length of time being greater than a preset number of times; or
the temperature variation trend of the temperature value of the brake disc or the brake motor in the braking system within the second preset length of time being an upward trend.

Here, during braking of the vehicle, the arithmetic resources can be reduced by setting the trigger conditions, or the driving experience of the driver may be poor after the brake force output from the brake motor is controlled to be reduced due to an error in the prediction.

By way of example, the preset trigger condition may be set to be that the number of times the driver brakes is greater than a preset number of times within a second preset length of time. Both the second preset length of time and the preset number of times may be set according to the actual situation, e.g., it may be that the number of times of braking is greater than 5 times within 1 minute. The driver pressing the brake pedal and then releasing the brake pedal is considered as one braking.

By way of example, the preset trigger condition may be set to be that a temperature variation trend of the temperature value of the brake disc or the brake motor in the braking system within a second preset length of time is an upward trend. For example, the temperature variation trend of the brake disc within 10 minutes is an upward trend. It may also be set to be that the temperature variation trend is an upward trend within a second preset length of time after the temperature value of the brake disc or brake motor in the braking system is greater than the third temperature threshold, and the third temperature threshold is smaller than the first temperature threshold.

As an optional embodiment, the method further includes:

outputting alert information, to alert a driver that there is a risk of brake force failure.

By way of example, when the brake force output from the brake motor is controlled to be reduced, the brake pedal travel pressed by the driver does not correspond to the brake force expected by the driver, and before the brake force output from the brake motor is controlled to be reduced, the user can be alerted by the alert information that there is a risk of the brake force being reduced, and herein, the driver can anticipate the situation of the reduction of the brake force in advance, which can to a certain extent alleviate the nervousness of the driver.

Referring to FIG. 5, which provides architecture for realizing the brake force control method provided in the present invention. The ADAS (Advanced Driving Assistance System) utilizes various sensors mounted on the vehicle, such as millimeter-wave radar, LiDAR, monocular or binocular cameras, and satellite navigation, etc., to sense the surrounding environment at any time during driving of the vehicle, collect data, and carry out recognition, detection and tracking of static and dynamic objects. The sensor may include a temperature sensor, a humidity sensor, and a speed sensor, to obtain environmental temperature information, environmental humidity information, and driving speed or wheel speed of the vehicle, etc. EMB braking system includes a brake motor, a brake pedal, a brake disc, etc. Here the ECU may receive the distance information of the surrounding obstacle of the vehicle transmitted by the ADAS, obtain the environmental temperature information, the environmental humidity information and the driving speed of the vehicle transmitted by the sensor, and receive the braking signal and the temperature of the motor from the EMB braking system, calculate the target brake force that the brake motor should output currently correspondingly according to the brake force control method described above, and control the EMB braking system to output the target braking force.

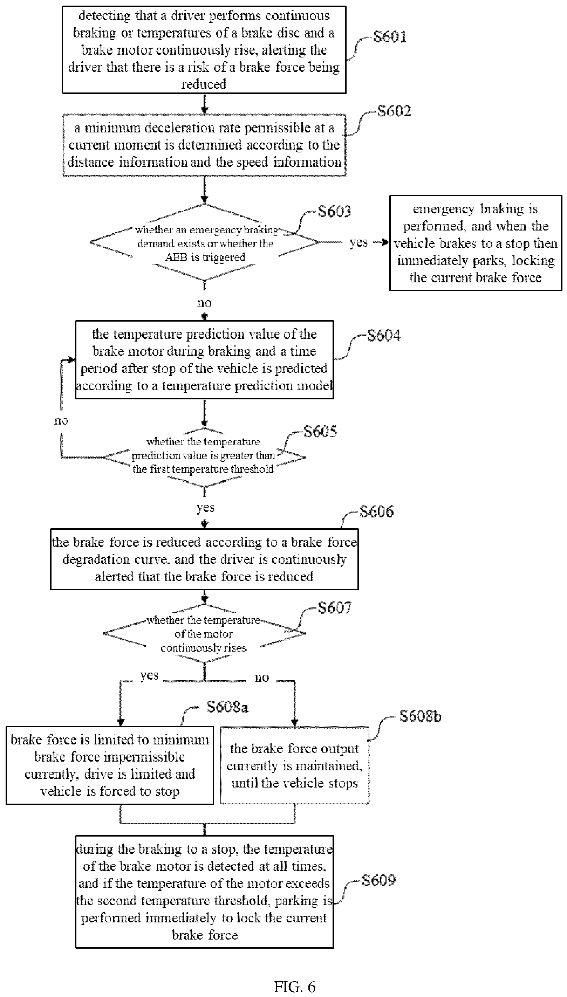

FIG. 6 is a flow diagram of another brake force control method illustrated according to an illustrative embodiment, which specifically includes the following steps.

In S601, a vehicle detects that a driver performs continuous braking and/or temperatures of a brake disc and a brake motor continuously rise, the driver is alerted that there is a risk of a brake force being reduced.

The driver can be alerted to the risk of the brake force being reduced through alert information.

Specifically, the number of times the driver brakes continuously is determined by the state of the brake pedal during a preset length of time, and the driver is considered to perform continuous braking when the number of times of braking within the preset length of time exceeds a preset number of times, e.g., 5 times. The temperature variation trend is determined by a plurality of temperature data of the brake disc and the brake motor within the preset length of time, and when a plurality of consecutive temperature data is increasing, the temperatures of the brake disc and the brake motor are considered to be continuously rising. The alert information can be broadcasted through voice or displayed on the central control display.

In S602, a minimum deceleration permissible at a current moment is determined according to the distance information and the speed information, to determine a minimum brake force permissible currently.

In S603, it is determined whether the driver has an emergency braking demand or whether the AEB system triggers the automatic emergency braking function.

Specifically, if an emergency braking demand is triggered or the automatic emergency braking function is triggered, the vehicle can be controlled to perform emergency braking, and when the vehicle brakes to a stop then immediately performs parking brake, locking the current brake force, to prevent braking failure of the brake motor. If no emergency brake demand is triggered or the automatic emergency brake function is not triggered, S604 is performed.

In S604, the temperature prediction value of the brake motor during braking and within a time period after stop of the vehicle is predicted according to a temperature prediction model.

Specifically, the temperature prediction model includes calculation formula (1), calculation formula (2), and calculation formula (3) as described above, which will not be repeated herein.

In S605, it is determined whether the temperature prediction value of the brake motor is greater than the first temperature threshold.

Specifically, step S606 is performed if the temperature of the brake motor is greater than the first temperature threshold, and if it is not greater than the first temperature threshold, it returns to step S604 to continually predict the temperature prediction value of the brake motor during braking and within a time period after stop of the vehicle.

In S606, the brake force is reduced according to a brake force degradation curve, and the driver is continuously alerted that the brake force is reduced.

Specifically, the brake force degradation curve herein refers to curve B in FIG. 4. For example, when the brake pedal travel is 15 mm, the reduced brake force is determined to be 40 N according to curve B.

In S607, the temperature of the brake motor is continuously detected, and it is determined whether the temperature of the brake motor continuously rises.

Specifically, here again, the temperature variation trend can be determined by obtaining a plurality of temperature data of the brake disc and the brake motor within a preset length of time, and when a plurality of consecutive temperature data is increasing, the temperatures of the brake disc and brake motor are considered to be continuously rising. When the temperature of the brake motor continuously rises, step S608a is performed, and when the temperature of the brake motor no longer continuously rises, step S608b is performed.

In S608a, the brake force is limited to the minimum brake force impermissible currently, the drive is limited and the vehicle is forced to stop.

Specifically, the minimum brake force permissible currently is determined according to the minimum deceleration determined in step S602. Limiting the drive means controlling the power of the vehicle to 0 in order to stop the vehicle in time.

In S608b, the brake force output currently is maintained, until the vehicle stops.

Here, what is maintained is the magnitude of brake force reduced according to the braking force degradation curve in step S606.

In S609, during the braking to a stop when step S608a or S608b is performed, the temperature of the brake motor is detected at all times, and if the temperature of the motor exceeds the second temperature threshold, parking brake is performed immediately to lock the current brake force.

Specifically, here the second temperature threshold is greater than the first temperature threshold and less than a failure temperature value at which the motor may experience braking fade. If the temperature of the motor exceeds the second temperature threshold, the brake force currently output from the brake motor is immediately output from the parking system, and the brake force output from the brake motor is controlled to be 0, to prevent braking failure of the brake motor.

FIG. 7 is a block diagram of a brake force control device illustrated according to an illustrative embodiment. As illustrated in FIG. 7, the brake force control device includes an obtaining module 701, a determining module 702, and a control module 703.

The obtaining module 701 is configured to obtain temperature data of a braking system of the vehicle and driving data of the vehicle during braking of the vehicle; and

The control module 702 is configured to control a brake force output from a brake motor according to the temperature data and the driving data.

As an optional embodiment, the control module 702 includes:

a first determining sub-module configured to determine a braking demand according to distance information and speed information between the vehicle and a surrounding obstacle; and
a first control sub-module configured to, in a case where the braking demand is not an emergency braking demand, control the brake force output from the brake motor according to the temperature data and the driving data.

As an optional embodiment, the control module 702 includes:

a second determining sub-module configured to determine a target temperature prediction value of the brake motor in the braking system according to the temperature data and the driving data; and
a second control sub-module configured to control the brake force output from the brake motor according to the target temperature prediction value.

As an optional embodiment, the second control sub-module is specifically configured to:
in a case where the target temperature prediction value is less than or equal to a first temperature threshold, control the brake motor to normally output the brake force.

As an optional embodiment, the second control sub-module is further configured to:
determine a first target brake force according to a brake pedal travel of the vehicle and a first preset relationship between the brake pedal travel and a normal brake force, and control the brake force output from the brake motor to be the first target brake force.

As an optional embodiment, the second control sub-module is specifically configured to:
in a case where the target temperature prediction value is greater than the first temperature threshold, reduce the brake force output from the brake motor.

As an optional embodiment, the second control sub-module is further configured to:

determine a second target brake force according to a brake pedal travel of the vehicle and a second preset relationship between the brake pedal travel and a degraded brake force, and control the brake force output from the brake motor to be the second target brake force,

in the second preset relationship, a degraded brake force corresponding to a brake pedal travel is less than or equal to a normal brake force corresponding to the brake pedal travel.

As an optional embodiment, the brake force control device also includes:

a temperature variation determining module configured to determine a temperature variation trend of the brake motor within a first preset length of time after the brake force output from the brake motor is reduced; and
a brake force control module configured to control the brake force output from the brake motor according to the temperature variation trend.

As an optional embodiment, the brake force control module is specifically configured to:

determine a minimum deceleration of the vehicle capable of ensuring braking safety during the braking, according to the distance information and speed information between the vehicle and the surrounding obstacle; and
in a case where the temperature variation trend is an upward trend, determine a third target brake force corresponding to the minimum deceleration, and control the brake force output from the brake motor to be the third target brake force.

As an optional embodiment, the brake force control module is specifically configured to:
in a case where the temperature variation trend is not an upward trend, control the brake force output from the brake motor to be unchanged until the vehicle stops.
As an optional embodiment, the temperature data includes a first temperature value of a brake disc in the braking system and a second temperature value of the brake motor at a first moment, the driving data includes driving environment data, driving speed and braking deceleration, and the driving environment data represents parameter data affecting a temperature of the braking system in a vehicle driving environment; and
the second determining sub-module is specifically configured to:

determine a first temperature prediction value of the brake disc at a second moment according to the first temperature value, the driving speed, the driving environment data and the braking deceleration, in which the second moment is a future moment of the first moment;
determine a second temperature prediction value of the brake motor at the second moment according to the second temperature value and the first temperature prediction value; and
determine the target temperature prediction value according to the second temperature prediction value.

As an optional embodiment, the second determining sub-module is also configured to:

determine first temperature influence data of the vehicle driving environment on the brake disc according to the driving environment data, in which the driving environment data at least includes a temperature and a humidity of the vehicle driving environment;
determine a second temperature influence data of the vehicle during the braking according to the driving speed and the braking deceleration, in which the second temperature influence data is configured to represent thermal energy generated by conversion of kinetic energy into brake disc friction during the braking of the vehicle; and
determine the first temperature prediction value according to the first temperature influence data, the second temperature influence data and the first temperature value.

As an optional embodiment, the second determining sub-module is also configured to:

determine a radiation temperature prediction value of the temperature of the brake disc radiated to the brake motor at the second moment according to the first temperature prediction value and a temperature influence factor, in which the temperature influence factor represents a degree of influence of the temperature of the brake disc on the temperature of the brake motor; and
determine the second temperature prediction value according to the radiation temperature prediction value and the second temperature value.

As an optional embodiment, the second determining sub-module is also configured to:

determine second temperature prediction values of the brake motor at a plurality of future moments, according to the temperature data and the driving data; and
determine a maximum value of the second temperature prediction values as the target temperature prediction value.

As an optional embodiment, the brake force control device is further configured to:

in a case where the temperature value of the brake motor exceeds a second temperature threshold, maintain the brake force currently output from the brake motor while a parking locking mechanism locks the vehicle, and control the brake force output from the brake motor to be zero,
in which the second temperature threshold is greater than the first temperature threshold, the second temperature threshold is less than a motor failure temperature value, and the motor failure temperature value is a temperature value configured to avoid a braking failure of the brake motor.

As an optional embodiment, before determining a target temperature prediction value of the brake motor in the braking system according to the temperature data and the driving data, the brake force control device is further configured to:
determine that the vehicle satisfies at least one of following preset trigger conditions:

a number of times the braking is performed within a second preset length of time being greater than a preset number of times;
the temperature variation trend of the temperature value of the brake disc or the brake motor in the braking system within the second preset length of time being an upward trend; or
there being no emergency braking demand or automatic emergency braking demand.

As an optional embodiment, the brake force control device is further configured to:
output alert information, to alert a driver that there is a risk of brake force failure.
With respect to the brake force control device in the above embodiments, the specific manner in which each module performs an operation has been described in detail in the embodiments relating to the brake force control method, and will not be described in detail herein.
The present invention also provides a non-transitory computer-readable storage medium having stored thereon computer program instructions which, when executed by a processor, implement the brake force control method provided in the present invention.
The present invention also provides a computer program product including a computer program that, when executed by a processor, implements the brake force control method provided in the present invention.
The present invention also provides a vehicle including: a storage device configured to store a computer program; and an execution device configured to execute the computer program to implement the brake force control method provided in the present invention.
FIG. 8 is a block diagram of a vehicle 800 illustrated according to an illustrative embodiment. For example, the vehicle 800 may be a hybrid vehicle, a non-hybrid vehicle, an electric vehicle, or another type of vehicle. The vehicle 800 can be a self-driving vehicle or a semi-autonomous vehicle.
Referring to FIG. 8, the vehicle 800 may include various subsystems, such as, an infotainment system 810, a perception system 820, a decision control system 830, a drive system 840, and a computing platform 850. The vehicle 800 may also include more or fewer subsystems, and each subsystem may include a plurality of components. In addition, each subsystem and each component of the vehicle 800 may be interconnected to each other by wired or wireless means.
In some embodiments, the infotainment system 810 may include a communication system, an entertainment system, and a navigation system, etc.
The perception system 820 may include several types of sensors for sensing information about the environment surrounding the vehicle 800. For example, the perception system 820 may include a global positioning system (the global positioning system may be a GPS system, a BeiDou system, or other positioning systems), an inertial measurement unit (IMU), a LiDAR, a millimeter wave radar, an ultrasonic radar, and a camera device.
The decision control system 830 may include a computing system, an overall vehicle controller, a steering system, a throttle, and a braking system.
The drive system 840 may include components that provide powered movement for the vehicle 800. In an embodiment, the drive system 840 may include an engine, an energy source, a drive train, and wheels. The engine may be one or a combination of an internal combustion engine, an electric motor, and an air compression engine. The engine is capable of converting the energy provided by the energy source into mechanical energy.
Some or all of the functions of the vehicle 800 are controlled by the computing platform 850. The computing platform 850 may include at least one processor 851 and memory 852, and the processor 851 may execute instructions 853 stored in the memory 852.

The processor 851 may be any conventional processor, such as a commercially available CPU (Central Processing Unit). The processors can also include Graphic Process Unit (GPU), Field Programmable Gate Array (FPGA), System on Chip (SOC), Application Specific Integrated Circuit (ASIC), or combinations thereof.

The memory may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

In addition to the instructions 853, the memory 852 may store data, such as road maps, route information, position, direction, speed, and other data of the vehicle. The data stored in memory 852 can be used by computing platform 850.

In embodiments of the present invention, the processor 851 may execute instructions 853 to implement all or some of the steps of the brake force control method described above.

The specification and embodiments are to be regarded as illustrative only, with the true scope of the invention being indicated by the following claims.

## Claims

1. A brake force control method, comprising:

   obtaining (S301) temperature data of a braking system of a vehicle and driving data of the vehicle during braking of the vehicle; and
   controlling (S302) a brake force output from a brake motor in the braking system according to the temperature data and the driving data.

2. The method according to claim 1, wherein controlling (S302) the brake force output from the brake motor according to the temperature data and the driving data comprises:

   determining a braking demand according to distance information between the vehicle and a surrounding obstacle and speed information between the vehicle and the surrounding obstacle; and
   in a case where the braking demand is not an emergency braking demand, controlling the brake force output from the brake motor according to the temperature data and the driving data.

3. The method according to claim 1 or 2, wherein controlling (S302) the brake force output from the brake motor according to the temperature data and the driving data comprises:

   determining a target temperature prediction value of the brake motor in the braking system according to the temperature data and the driving data; and
   controlling the brake force output from the brake motor according to the target temperature prediction value.

4. The method according to claim 3, wherein controlling the brake force output from the brake motor according to the target temperature prediction value comprises:

   in a case where the target temperature prediction value is less than or equal to a first temperature threshold, controlling the brake motor to normally output the brake force;
   wherein, optionally, controlling the brake motor to normally output the brake force comprises:
   determining a first target brake force according to a brake pedal travel of the vehicle and a first preset relationship between the brake pedal travel and a normal brake force, and controlling the brake force output from the brake motor to be the first target brake force.

5. The method according to claim 3, wherein controlling the brake force output from the brake motor according to the target temperature prediction value comprises:
   in a case where the target temperature prediction value is greater than a first temperature threshold, reducing the brake force output from the brake motor.

6. The method according to claim 5, wherein reducing the brake force output from the brake motor comprises:

   determining a second target brake force according to a brake pedal travel of the vehicle and a second preset relationship between the brake pedal travel and a degraded brake force, and controlling the brake force output from the brake motor to be the second target brake force,

wherein, in the second preset relationship, a degraded brake force corresponding to a brake pedal travel is less than or equal to a normal brake force corresponding to the brake pedal travel.

7. The method according to claim 5 or 6, further comprising:

determining a temperature variation trend of the brake motor within a first preset length of time after reducing the brake force output from the brake motor; and

controlling the brake force output from the brake motor according to the temperature variation trend.

8. The method according to claim 7, wherein controlling the brake force output from the brake motor according to the temperature variation trend comprises:

determining a minimum deceleration of the vehicle capable of ensuring braking safety during the braking, according to distance information between the vehicle and a surrounding obstacle and speed information between the vehicle and the surrounding obstacle; and

in a case where the temperature variation trend is an upward trend, determining a third target brake force corresponding to the minimum deceleration, and controlling the brake force output from the brake motor to be the third target brake force, or

in a case where the temperature variation trend is not an upward trend, controlling the brake force output from the brake motor to be unchanged until the vehicle stops.

9. The method according to any one of claims 3 to 8, wherein the temperature data comprises a first temperature value of a brake disc in the braking system and a second temperature value of the brake motor at a first moment, the driving data comprises driving environment data, driving speed and braking deceleration, and the driving environment data represents parameter data affecting a temperature of the braking system in a vehicle driving environment; and determining the target temperature prediction value of the brake motor in the braking system according to the temperature data and the driving data comprises:

determining a first temperature prediction value of the brake disc at a second moment according to the first temperature value, the driving speed, the driving environment data and the braking deceleration, wherein the second moment is a future moment of the first moment;

determining a second temperature prediction value of the brake motor at the second moment according to the second temperature value and the first temperature prediction value; and

determining the target temperature prediction value according to the second temperature prediction value.

10. The method according to claim 9, wherein determining a first temperature prediction value of the brake disc at a second moment according to the first temperature value, the driving speed, the driving environment data and the braking deceleration comprises:

determining first temperature influence data of the vehicle driving environment on the brake disc according to the driving environment data, wherein the driving environment data at least comprises a temperature and a humidity of the vehicle driving environment;

determining second temperature influence data of the vehicle during the braking according to the driving speed and the braking deceleration, wherein the second temperature influence data is configured to represent thermal energy generated by conversion of kinetic energy into brake disc friction during the braking of the vehicle; and

determining the first temperature prediction value according to the first temperature influence data, the second temperature influence data and the first temperature value; or

wherein determining a second temperature prediction value of the brake motor at the second moment according to the second temperature value and the first temperature prediction value comprises:

determining a radiation temperature prediction value of the temperature of the brake disc radiated to the brake motor at the second moment according to the first temperature prediction value and a temperature influence factor, wherein the temperature influence factor represents a degree of influence of the temperature of the brake disc on the temperature of the brake motor; and

determining the second temperature prediction value according to the radiation temperature prediction value and the second temperature value.

11. The method according to any one of claims 3 to 10, wherein determining a target temperature prediction value of the brake motor in the braking system according to the temperature data and the driving data comprises:

determining second temperature prediction values of the brake motor at a plurality of future moments, according to the temperature data and the driving data; and
determining a maximum value of the second temperature prediction values as the target temperature prediction value.

12. The method according to any one of claims 1 to 11, further comprising:

in a case where a temperature value of the brake motor exceeds a second temperature threshold, maintaining the brake force currently output from the brake motor while a parking locking mechanism locks the vehicle, and controlling the brake force output from the brake motor to be zero,
wherein the second temperature threshold is greater than a first temperature threshold, the second temperature threshold is less than a motor failure temperature value, and the motor failure temperature value is a temperature value of the brake motor when experiencing a braking failure.

13. The method according to any one of claims 1 to 12, wherein before controlling (S302) a brake force output from a brake motor in the braking system according to the temperature data and the driving data, the method further comprises:

determining that the vehicle satisfies at least one of following preset trigger conditions:

a number of times the braking is performed within a second preset length of time being greater than a preset number of times; or
a temperature variation trend of a temperature value of a brake disc or the brake motor in the braking system within the second preset length of time being an upward trend.

14. The method according to claim 13, further comprising:
outputting alert information, to alert a driver that there is a risk of brake force failure.

15. A brake force control device, configured to perform the method according to any one of claims 1 to 14.

FIG. 1

FIG. 2

obtaining temperature data of a braking system of a vehicle and driving data of the vehicle during braking of the vehicle | S301

controlling a brake force output from a brake motor in the braking system according to the temperature data and the driving data | S302

FIG. 3

FIG. 4

FIG. 5

detecting that a driver performs continuous braking or temperatures of a brake disc and a brake motor continuously rise, alerting the driver that there is a risk of a brake force being reduced ⟋S601

↓

a minimum deceleration rate permissible at a current moment is determined according to the distance information and the speed information ⟋S602

↓

whether an emergency braking demand exists or whether the AEB is triggered ⟋S603 → yes → emergency braking is performed, and when the vehicle brakes to a stop then immediately parks, locking the current brake force

↓ no

the temperature prediction value of the brake motor during braking and a time period after stop of the vehicle is predicted according to a temperature prediction model ⟋S604

↓

whether the temperature prediction value is greater than the first temperature threshold ⟋S605

no →

↓ yes

the brake force is reduced according to a brake force degradation curve, and the driver is continuously alerted that the brake force is reduced ⟋S606

↓

whether the temperature of the motor continuously rises ⟋S607

yes / no

⟋ S608a
brake force is limited to minimum brake force impermissible currently, drive is limited and vehicle is forced to stop

⟋ S608b
the brake force output currently is maintained, until the vehicle stops

↓

during the braking to a stop, the temperature of the brake motor is detected at all times, and if the temperature of the motor exceeds the second temperature threshold, parking is performed immediately to lock the current brake force ⟋S609

FIG. 6

motor temperature
control device

obtaining module — 701

control module — 702

FIG. 7

800

infotainment
system — 810

perception
system — 820

decision control
system — 830

drive system — 840

computing
platform — 850

processor — 851

memory — 852

instructions — 853

FIG. 8

FIG. 9

Europäisches
Patentamt
European
Patent Office
Office européen
des brevets

# EUROPEAN SEARCH REPORT

**Application Number**

EP 25 15 7692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/235065 A1 (LOGAN JON K [US] ET AL) 16 September 2010 (2010-09-16) | 1,15 | INV. B60T7/04 |
| A | * Fig. 1-3; par. [0001], [0011], [0019], [0022], [0037]; cl. 1, 10 * | 2-14 | B60T8/171 B60T8/172 |
| | ----- | | B60T8/174 |
| X | US 2013/162009 A1 (MITTS KURT [US] ET AL) 27 June 2013 (2013-06-27) | 1,15 | B60T8/32 B60T13/74 |
| A | * Fig. 1, par. [0026], [0027], [0051] * | 2-14 | B60T17/22 |
| | ----- | | F16D66/02 |
| X | KR 2021 0142163 A (NN) 24 November 2021 (2021-11-24) | 1,15 | ADD. |
| A | * Fig. 1, par. [0001], [0025], [0026], cl. 1 * | 2-14 | F16D66/00 F16D121/24 |
| | ----- | | |
| X | CN 107 303 820 A (SAIC MOTOR CORP LTD) 31 October 2017 (2017-10-31) | 1,15 | |
| A | * Fig. 1-6, p. 7, 14-15, cl. 7 * | 2-14 | |
| | ----- | | |
| X | CN 116 442 967 A (HUAWEI DIGITAL ENERGY TECH CO LTD) 18 July 2023 (2023-07-18) | 1,15 | |
| A | * Fig. 1-10, par. [0001], [0051], [0060], [0098] * | 2-14 | **TECHNICAL FIELDS SEARCHED (IPC)** |
| | ----- | | B60T F16D |

The present search report has been drawn up for all claims

| Place of search | Date of completion of the search | Examiner |
|---|---|---|
| Munich | 22 July 2025 | Kirov, Youlian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 7692

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | Publication date | Patent family member(s) | | Publication date |
|---|---|---|---|---|
| US 2010235065 A1 | 16-09-2010 | NONE | | |
| US 2013162009 A1 | 27-06-2013 | CN | 103171444 A | 26-06-2013 |
| | | US | 2013162009 A1 | 27-06-2013 |
| KR 20210142163 A | 24-11-2021 | CN | 111731251 A | 02-10-2020 |
| | | EP | 3947070 A1 | 09-02-2022 |
| | | JP | 2022527319 A | 01-06-2022 |
| | | KR | 20210142163 A | 24-11-2021 |
| | | US | 2022009464 A1 | 13-01-2022 |
| | | WO | 2020193420 A1 | 01-10-2020 |
| CN 107303820 A | 31-10-2017 | NONE | | |
| CN 116442967 A | 18-07-2023 | CN | 116442967 A | 18-07-2023 |
| | | EP | 4480767 A1 | 25-12-2024 |
| | | US | 2024425024 A1 | 26-12-2024 |
| | | WO | 2024230224 A1 | 14-11-2024 |

EPO FORM P0459

For more details about this annex : see Official Journal of the European Patent Office, No. 12/82